# EUROPÄISCHE PATENTSCHRIFT

(11) **EP 1 625 052 B1**
(45) Veröffentlichungstag und Bekanntmachung des Hinweises auf die Patenterteilung: **23.04.2008**
(21) Anmeldenummer: 04711568.8
(22) Anmeldetag: 17.02.2004
(51) Int. Cl.: B60R 21/01

(54) **VORRICHTUNG ZUR ÜBERWACHUNG DES AUFBLASVERHALTENS WENIGSTENS EINES AIRBAGS**
DEVICE FOR MONITORING THE INFLATION FUNCTION OF AT LEAST ONE AIRBAG
DISPOSITIF DESTINE A SURVEILLER LE COMPORTEMENT DE GONFLAGE D'AU MOINS UN AIRBAG

(30) Priorität: 15.04.2003 DE 10317214
(43) Veröffentlichungstag der Anmeldung: 15.02.2006
(73) Patentinhaber: ROBERT BOSCH GMBH, 70442 Stuttgart (DE)
(72) Erfinder: MATTES, Bernhard, 74343 Sachsenheim (DE); STUMPP, Hans-Peter, 71706 Markgroeningen (DE); NITSCHKE, Werner, 71254 Ditzingen (DE); SCHUMACHER, Hartmut, 71691 Freiberg (DE); WOTTRENG, Walter, 370-2 Gumma-Ken (JP); GUETTLER, Hans, 74199 Untergruppenbach (DE); MORITZ, Rainer, 70794 Filderstadt (DE); HERRMANN, Thomas, 74613 Oehringen (DE); STUETZLER, Frank-Juergen, Farmington Hills, MI 48331 (US); BALZER, Knut, 71717 Beilstein (DE); LICH, Thomas, 71409 Schwaikheim (DE); GROEGER, Ulrike, 70499 Stuttgart (DE); KUTTENBERGER, Alfred, 71696 Moeglingen (DE); GROESCH, Lothar, Farmington Hills, MI 48331 (US); SCHMID, Michael, 70806 Kornwestheim (DE); KROENINGER, Mario, 77815 Buehl (DE)
(86) Internationale Anmeldenummer: PCT/DE2004/000287
(87) Internationale Veröffentlichungsnummer: WO 2004/091980

(56) Entgegenhaltungen:
- WO-A-94/22693
- DE-A- 10 107 273
- DE-A- 10 137 670
- DE-A- 19 629 819
- DE-A- 19 913 095
- DE-C- 4 419 738
- US-A- 6 135 494
- US-B1- 6 416 080

## Beschreibung

### Stand der Technik

Die Erfindung geht aus von einer Vorrichtung nach der Gattung des unabhängigen Patentanspruchs.

Aus DE 202 03 002 U1 ist eine Fahrzeuginsassen-Schutzvorrichtung bekannt, wobei es vorgesehen ist, dass die vollständig geöffnete Stellung einer Abdeckplatte für einen Airbag detektiert wird und dass der Gasgenerator nur bei Erreichen der zumindest annähernd vollständig geöffneten Stellung aktiviert wird.

Nachteilig an dieser Lösung ist, dass hier lediglich die Abdeckung überwacht wird und keine Information über den Airbag erzeugt wird.

Aus DE 101 07 273 A1 ist es bekannt, einen Innendruck in einem Airbag zu messen und diesen Innendruck in Abhängigkeit von einer Fahrzeugverzögerung und eines Verlaufs des Airbaginnendrucks über der Zeit zu steuern. Aus DE 196 29 819 A1 ist es bekannt, das Abstrahlen einer Notrufkennung mit einer Airbagauslösung zu koppeln, sodass im Falle eines den Airbag auslösenden Aufpralls der Notrufgeber aktiviert und eine diesem Fall zugeordnete Notfallkennung abgegeben wird. Aus DE 101 37 670 A1 ist es bekannt, dass eine Airbageinrichtung im regulären Zustand ein Regulärzustandssignal ausgibt. Wenn ein Stoßsensor bei einem Unfall oder einem anderen Notfall einen Stoß feststellt, der größer als ein vorbestimmter Wert ist, sendet er ein Triggersignal an die Airbageinrichtung. Daraufhin entwickelt die Airbageinrichtung den Airbag und gibt ein Signal wie etwa ein Airbagentwicklungssignal aus, das erforderlich ist, um den Start des Notfallmeldeprozesses zu veranlassen.

Aus DE 44 19 738 ist es bekannt, dass ein Sensor in Gestalt eines elektrischen Kontakts oder eines Näherungsschalters vorgesehen sein kann und anzeigt, wenn sich die Lage des Verschlussdeckels nach dem Abreißen von einem oder mehreren clipartigen Haltemitteln verändert hat.

Aus US 6 416 080 B1 ist es bekannt, einen Abstandssensor zu verwenden, um den Abstand vom Sensor zu einer Oberfläche, bezogen auf den Fahrzeuginsassen, zu bestimmen. Beispielhaft werden zwei Abstandssensoren genannt. Jeder der Abstandssensoren ist mit einem Controller verbunden. Der erste Abstandssensor ist in der Instrumententafel benachbart zum Airbagmodul angeordnet. Der zweite Abstandssensor ist am Fahrzeughimmel angeordnet. Aus DE 199 13 095 A1 ist es bekannt gemäß dem Oberbegriff des Anspruchs 1, das Aufblasverhalten eines Airbags beispielsweise mittels einer optischen Abstandsmessung innerhalb des Gassacks durchzuführen.

### Vorteile der Erfindung

Die erfindungsgemäße Vorrichtung mit den Merkmalen des unabhängigen Patentanspruchs hat Vorteil. Es ist bekannt dass nunmehr das Aufblasverhalten des wenigstens einen Airbags überwacht wird. Dies ermöglicht genaue Aussagen über den Verlauf der Entfaltung und gegebenenfalls eine entsprechende Regelung. Weiterhin ist damit eine gute Identifikation möglich, dass es überhaupt zu einer Auslösung des Airbags gekommen ist. Dies hat auch Dokumentationswert, insbesondere im Sinne eines Crashrekorders. Auch kann diese Information für eventuell zu rufende Rettungsmannschaften von Nutzen sein, um zu wissen, wie viele Airbags gezündet wurden, um die Anzahl der Verletzten leicht abschätzen zu können. Auch die Schwere der Verletzungen bzw. des Unfalls kann damit gut abgeschätzt werden. Insbesondere ist es mit der Vorrichtung möglich, dass die Information über das Aufblasverhalten dem Steuergerät gemeldet werden kann, insbesondere dass sich ein Airbag entfaltet hat, und in welchem Zustand er sich dann gerade befindet. Damit kann dann eine kontinuierliche Regelung für das Aufblasverhalten realisiert werden. Insbesondere kann dabei vorgesehen sein, dass der Aufblasvorgang unterbrochen werden kann und damit Verletzungen der Insassen minimiert werden.

Durch die in den abhängigen Ansprüchen vorgesehenen Maßnahmen und Weiterbildungen sind vorteilhafte Verbesserungen der im unabhängigen Patentanspruch angegebenen Vorrichtung möglich.

Besonders vorteilhaft ist, dass die Vorrichtung mit einer Ansteuervorrichtung für den wenigstens einen Airbag so verbunden ist, dass die Vorrichtung in Abhängigkeit von der Überwachung des Aufblasverhaltens die Ansteuervorrichtung beeinflusst. Damit wird ein Regelkreis aufgebaut und eine angepasste Ansteuerung ist somit möglich. Dies kann durch eine entsprechende Ventilsteuerung erreicht werden.

Vorteilhafter Weise ist die Überwachung selbst akustisch oder optisch realisiert. Bei einer akustischen Realisierung ist es besonders vorteilhaft, dass hierfür bereits vorhandene Freisprechmikrofone verwendbar sind. Bei der akustischen Überwachung kann somit durch eine Analyse des Geräusches auf ein Aufblasen eines Airbags geschlossen werden, und wie dieses Aufblasen verläuft. Auch Begleitumstände, wie das Wegspringen einer Abdeckplatte des Airbags kann so akustisch aufgenommen werden. Dies ermöglicht eine sehr genaue Analyse des Aufblasverhaltens. Alternativ oder zusätzlich ist es möglich, dass die optische Überwachung verwendet wird. Hierzu kann üblicherweise eine Videosensorik verwendet werden. Die Videosensorik kann über einen Mustervergleich das Aufblasverhalten analysieren. Weiterhin ist es möglich, dass der Airbag selbst eine Abstandsmessung aufweist, die im Airbag angeordnet ist, um das Aufblasen zu analysieren. Dazu kann insbesondere eine solche Messvorrichtung verwendet werden, die das Phänomen der Reflexion ausnutzt, und beispielsweise mittels Radar, Infrarot oder Ultraschall operiert. Durch die Abstandsmessung ist es insbesondere möglich, sehr schnell das Aufblasverhalten des Airbags zu charakterisieren. Hier kann der gemessene Wert direkt verwendet werden, während die akustische oder optische Überwachung eine Mustererkennung bedingt, um das Aufblasverhalten aus den gemessenen Signalen zu erkennen. Dies ist erheblich rechenaufwändiger, als die einfache Abstandsmessung. In einer Weiterbildung ist vorgesehen, dass die Abdeckvorrichtung durch einen Schalter überwacht wird. Dieser Schalter dient dazu, den Öffnungsvorgang der Abdeckvorrichtung zu erkennen. Anstatt eines Schalters sind auch andere Sensoriken möglich, die den Grad der Öffnung überwachen können.

Weiterhin ist es vorteilhafter Weise vorgesehen, dass die erfindungsgemäße Vorrichtung mit einer Sendeeinrichtung verbunden ist, um bei einem automatischen Notruf auch die Anzahl der ausgelösten Airbags zu übermitteln. Dies ist ein Hinweis auf die Anzahl der Unfallopfer in einem Fahrzeug. Dieser Notruf kann mit anderen Daten über die Crashschwere, den Ort, die Zeit und gegebenenfalls medizinischen Daten sowie der Crashschwere ergänzt werden.

### Zeichnung

Ausführungsbeispiele der Erfindung sind in der Zeichnung dargestellt und werden in der nachfolgenden Beschreibung näher erläutert.

Es zeigen
- Figur 1: ein erstes Blockschaltbild der erfindungsgemäßen Vorrichtung,
- Figur 2: eine Prinzipdarstellung der Abstandsmessung,
- Figur 3: ein zweites Blockschaltbild der erfindungsgemäßen Vorrichtung und
- Figur 4: ein drittes Blockschaltbild der erfindungsgemäßen Vorrichtung.

### Beschreibung

Seit der Einführung des Airbags im Jahre 1980 kam es zu nachhaltigen Weiterentwicklungen im Bereich der Rückhaltesysteme. Hierzu zählen neben dem Beifahrerairbag auch Seitenairbags und Kopfairbags. Bis vor wenigen Jahren war noch die einstufige Zündung von Airbags Stand der Technik. Heute ist jedoch bereits die Auslösung in mehreren Stufen möglich. Generell werden derzeit zweistufige Airbags für den Frontbereich eingesetzt. Neue Trends gehen dahin, dass der Airbag stufenlos einstellbar gemacht werden soll. Dies ermöglicht eine für einen Insassen individuelle Auslösevorrichtung. Mit einer Hilfe von Zusatzsensorik wie Innenraumerkennung, Precrashsensorik und Roll-Over-Erkennung ist somit eine erhebliche Verbesserung des Insassenschutzes in verschiedenen Crashsituationen gegeben, jedoch ist eine optimale Anpassung noch nicht möglich, da keinerlei Rückmeldung über das Zünden des Airbags an das Steuergerät des Rückhaltesystems erfolgt.

Erfindungsgemäß ist es daher vorgesehen, dass eine Vorrichtung das Aufblähen des Airbags überwacht. Damit kann dann insbesondere ein Regelkreis aufgebaut werden, um in Abhängigkeit von diesem Überwachungssignal die Ansteuerung eines Gasgenerators für einen Airbag zu beeinflussen. Folglich ist der Kern die Erfassung des Auslösevorgangs, der durch ein Steuergerät zur Auslösung von Rückhaltesystemen initiiert wurde. Der Auslösevorgang wird dadurch charakterisiert, dass sich der Airbag oder das entsprechende Rückhaltesystem entfaltet, also sich in einem Aufblasvorgang befindet. Für den Frontairbag würde dies bedeuten, dass der Auslösevorgang die Sprengung der Zündpille verursacht und der Airbag zunächst die Abdeckung/Abdeckplatte des Armaturenbretts oder des Lenkrads entsprechend wegsprengt, so dass ein weiterer Aufblasvorgang stattfinden kann. Zentral kann nun ein Sensor eingesetzt werden, der das Wegsprengen der Abdeckplatte erfasst und dies dem zentralen Steuergerät mitteilt, so dass das Steuergerät entsprechend reagieren kann. Noch wichtiger ist es jedoch, den Aufblasvorgang selbst zu erfassen, also wie sich der Airbag entfaltet. Die Erfassung kann über verschiedene Sensoren erfolgen. Hierzu könnte ein akustischer, ein optischer oder ein einfacher Drahtschalter Verwendung finden. Idealerweise kann bei akustischen Sensoren ein gegebenenfalls im Fahrzeug integriertes Mikrofon, zum Beispiel der Freisprecheinrichtung, verwendet werden. Im Falle der optischen Erfassung kann beispielsweise eine Videoinnenkamera diese Funktion übernehmen. Über einen Schalter ist die einfachste Realisierung denkbar, so dass eine binärlogische Information erfasst wird: Airbag gezündet: Ja/Nein. In anderen Fällen kann über gegebenenfalls eine Rückkopplung erfasst werden, in welchem Zustand sich der Airbag in seinem Aufblasverhalten befindet.

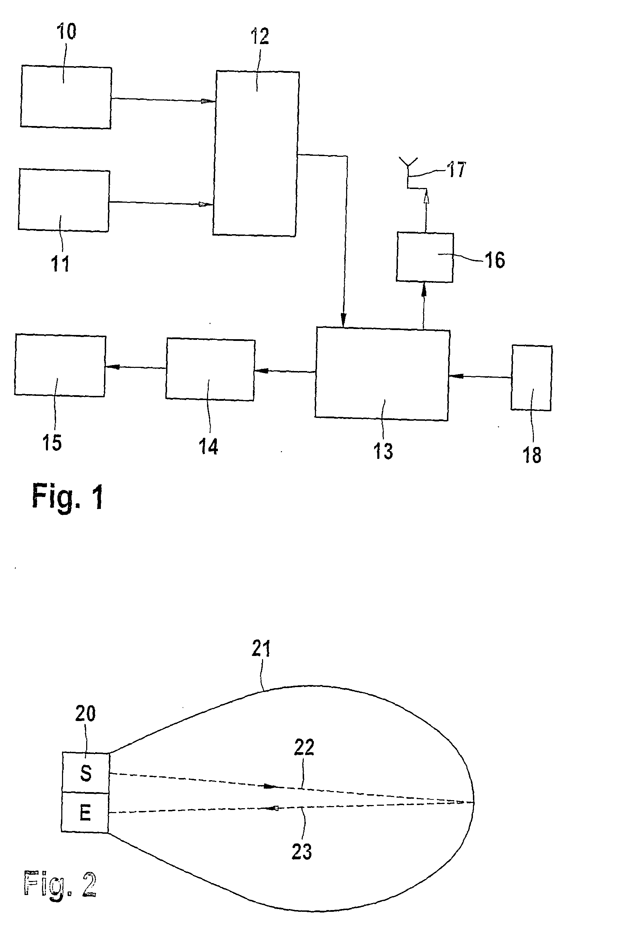

Figur 1 zeigt in einem ersten Blockschaltbild die erfindungsgemäße Vorrichtung. Ein Sensor 10 zur Überwachung des Aufblasverhaltens des Airbags ist an einen ersten Dateneingang einer Sensorauswertung 12, also eines Prozessors angeschlossen. An einen zweiten Dateneingang des Prozessors 12 ist ein Sensor 11 zur Überwachung des Öffnungsverhaltens der Abdeckung des Airbags angeschlossen. Der Sensor 11 ist vorzugsweise ein Schalter, wobei jedoch auch ein solcher Sensor vorgesehen sein kann, der kontinuierlich das Öffnungsverhalten der Abdeckung überwacht. Dies kann beispielsweise über einen Widerstand erfolgen. Der Prozessor 12 ist über einen Datenausgang an einen ersten Dateneingang eines Steuergeräts 13 eines Rückhaltesystems angeschlossen. Das Steuergerät 13 steuert demnach Rückhaltemittel, wie einen Airbag, an. Dazu ist das Steuergerät 13 mit einer Ansteuerung 14 für einen Airbag verbunden, die einen Airbag 15 in seinem Aufblasverhalten beeinflusst. Durch den Sensor 10, der beispielsweise ein Mikrofon oder eine Videokamera sein kann, ist nun eine Regelung über den Prozessor 12 und das Steuergerät 13 sowie die Ansteuerung 14 möglich. Dies liegt insbesondere daran, dass das Aufblasverhalten des Airbags 15 in Abhängigkeit von dem Sensorsignal des Sensors 10 beeinflusst wird. Das Steuergerät 13 ist jedoch über einen Dateneingang mit einer Crashsensorik 18 verbunden, um überhaupt in einem Crashfall eine Auslösung des Airbags 15 zu entscheiden. Neben dem hier dargestellten Airbag 15 können weitere Airbags und andere Rückhaltemittel von dem Steuergerät 13 angesteuert werden. Das Steuergerät 13 löst jedoch nur die Rückhaltemittel aus, die für im Fahrzeug befindliche Personen notwendig sind. D.h. das Steuergerät 13 ist weiterhin mit einer Insassenerkennung verbunden, die hier nicht dargestellt ist, um die Anzahl der Personen und welche Personen sich im Fahrzeug befinden, zu detektieren. Liegt keine Insassenerkennung vor, dann werden in Abhängigkeit von den Crashsignalen die Rückhaltemittel ausgelöst, ob sich eine Person auf dem jeweiligen Sitz befindet, oder nicht. Über einen zweiten Datenausgang ist das Steuergerät 13 mit einer Sendeeinrichtung 16 verbunden, die wiederum an eine Antenne 17 angeschlossen ist. Über die Sendeeinrichtung 16 mit der Antenne 17 kann das Steuergerät 13 einen Notruf abgeben. In diese Notrufmeldung kann neben der Position und der Unfallzeit auch angegeben werden, wie viele Rückhaltemittel ausgelöst wurden. Dies kann Rettungskräften einen Hinweis auf die Anzahl der Verletzten und die Schwere der Verletzungen geben. Die Sendeeinrichtung 16 mit der Antenne 17 kann Teil eines Mobiltelefons sein, das im Fahrzeug eingebaut bzw. eingesteckt ist. Es kann auch sein, dass die Sendeeinheit 16 lediglich ein Modul ist, das die Sende-Empfangs-Möglichkeiten eines Mobiltelefons realisiert, also lediglich die Elektronik ohne das Gehäuse des Mobiltelefons.

In Figur 2 ist dargestellt, wie über eine Abstandsmessung das Aufblasverhalten eines Airbags kontrolliert werden kann. Eine Sende-Empfangs-Einrichtung 20 ist über eine innere Öffnung mit einem Airbag 21 verbunden. Damit ist es für die Sende-EmpfangsEinheit möglich, in den Airbag 21 Signale abzugeben, um die Ausdehnung des Airbags 21 zu messen. Dafür versendet der Sendeteil der Sende-Empfangs-Einrichtung 20 ein Signal 22, das am Ende des Airbags reflektiert wird und als Strahl 23 von der Sende-Empfangs-Einrichtung 20 empfangen wird. Über die Laufzeit ist dann eine Abstandsmessung möglich. Für die Abstandsmessung können Ultraschall, Radar oder andere optische Signale verwendet werden. Es ist auch eine Abstandsmessung über eine Schnur oder einen Draht möglich, der am äußersten Ende des Airbags 21 angebracht ist und bei der Entfaltung des Airbags 21 abgerollt wird, so dass lediglich die Länge des abgerollten Drahtes bzw. Schnur gemessen werden muss, um die Ausdehnung des Airbags 21 zu erfassen.

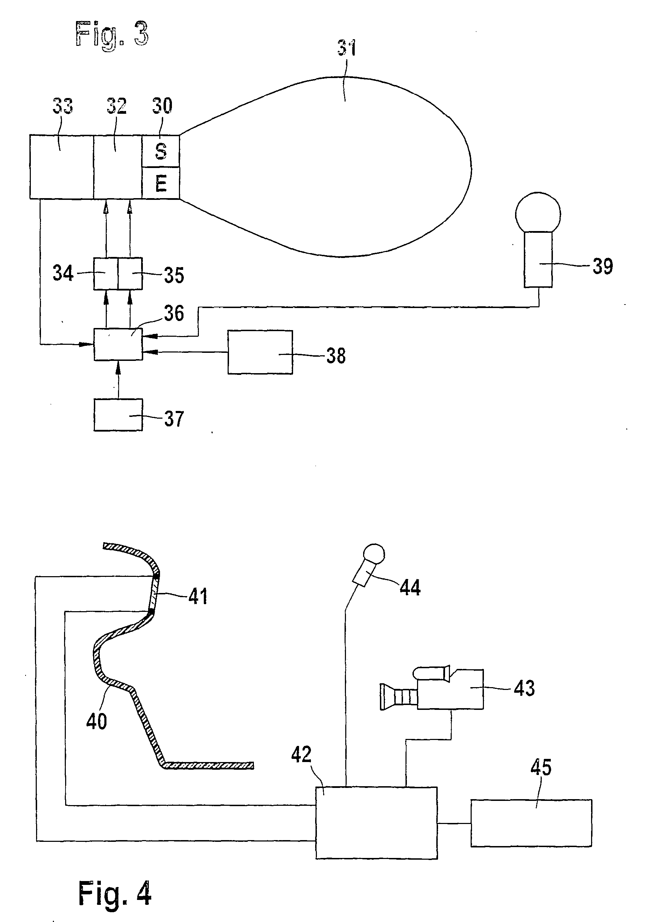

In Figur 3 ist ein zweites Blockschaltbild der erfindungsgemäßen Vorrichtung dargestellt. Ein Airbag 31 ist, wie in Figur 2 dargestellt, über eine innere Öffnung an eine Sende-Empfangs-Einrichtung 30 zur Abstandsmessung angeschlossen. Daneben ist auch eine Gaszuführung zum Airbag 31 vorgesehen. Diese Gaszuführung wird über eine Ventilvorrichtung 32, die beispielsweise über einen Piezoaktuator gesteuert wird, im Zufluss des Gases zum Airbag 31 beeinflusst. Die Steuerung übernimmt eine Einspritztreiberschaltung 34, wobei in dem Modul 32 auch ein Auslassventil vorgesehen ist, das von der Auslasstreiberschaltung 35 angesteuert wird. Die Einspritztreiberschaltung 34 und die Auslasstreiberschaltung 35 werden durch einen Prozessor 36 über jeweilige Datenausgänge gesteuert. Das Modul 32 ist weiterhin an eine Gasreserve 33 angeschlossen, in der Helium, Argon oder Stickstoff im Auslösefall von 200 bis 500 Kbar expandiert wird. Diese Gasmenge kann beispielsweise für zwei Befüllungen vorgesehen sein, um eine reversible Auslösung des Airbags 31 vorzusehen, beispielsweise in solchen Fällen, wie bei einem Postcrash. Das sind solche Fälle, wo nach einem eigentlichen Unfall weitere Unfälle passieren, um einem Verletzten weiterhin einen optimalen Schutz zu bieten. Im Gasbehälter 33 wird der Druck gemessen, der an den Prozessor 36 übermittelt wird. An den Prozessor 36, der der Prozessor eines Airbagsteuergerätes ist, ist weiterhin eine Crashsensorik 37 angeschlossen, um den Auslösefall an sich zu erkennen. Weiterhin ist an einen weiteren Dateneingang des Prozessors 36 eine Insassenerkennung angeschlossen, um festzustellen, ob auf dem betreffenden Sitzplatz im Fahrzeug ein Airbag ausgelöst werden soll. An einem weiteren Dateneingang des Prozessors 36 ist ein Mikrofon 39 angeschlossen, das zur Entfaltungsüberwachung des Airbags 31 dient. Die akustischen Signale des Mikrofons 39 werden durch den Prozessor 36 oder eine ausgelagerte Elektronik gefiltert, verstärkt und analysiert. Bei der Analyse werden insbesondere bekannte Methoden der Mustererkennung verwendet, um zu erkennen, was das Mikrofon hier aufnimmt. Die Mustererkennung läuft mit Hilfe von abgespeicherten Daten, die beispielsweise durch einen Fahrzeughersteller oder einen Zulieferer in Versuchen erzeugt wurden.

Figur 4 zeigt ein drittes Blockschaltbild der erfindungsgemäßen Vorrichtung. Eine Armatur mit Beifahrerairbag und Abdeckplatte 40 weist einen einfachen Schalter 41 bei der Abdeckplatte auf, der durch eine Hardware für die Schaltererfassung 42 überwacht wird. Erkennt die Hardware 42, die beispielsweise einen Prozessor oder eine dedizierte Elektronik aufweist, dass der Schalter ein Öffnen der Abdeckplatte anzeigt, dann überträgt dies die Elektronik 42 an ein Steuergerät für Rückhaltemittel 45. Zur Überwachung der Entfaltung des Airbags sind hier wiederum ein Mikrofon 44 und eine Kamera 43 vorgesehen, die ebenfalls separat an die Elektronik 42 angeschlossen sind, um die entsprechenden Signale zu übermitteln. Damit überträgt die Hardware 42 zunächst, ob die Abdeckplatte 40 geöffnet wurde, um die Entfaltung des Airbags zu ermöglichen, und das eigentliche Entfaltungsverhalten über Signale des Mikrofons 44 bzw. der Kamera 43. In Abhängigkeit davon kann das Steuergerät 45 dann die Entfaltung des Airbags beeinflussen.

## Patentansprüche

1. Vorrichtung, die derart konfiguriert ist, dass die Vorrichtung ein Aufblasverhalten wenigstens eines Airbags (21, 31) überwacht, **dadurch gekennzeichnet, dass** die Vorrichtung ein Ereignis gemäß einer Airbagaktivierung mittels einer Schalterabfrage an der Airbag- Abdeckvorrichtung erkennt und in einen Speicher zu Dokumentationszwecken mit einem Zeitstempel schreibt.

2. Vorrichtung nach Anspruch 1, **dadurch gekennzeichnet, dass** die Vorrichtung mit einer Ansteuervorrichtung (14, 34, 35) für den wenigstens einen Airbag (21, 31) derart verbindbar ist, dass die Vorrichtung in Abhängigkeit von der Überwachung des Aufblasverhaltens die Ansteuervorrichtung (14, 34, 35) beeinflusst.

3. Vorrichtung nach Anspruch 1 oder 2, **dadurch gekennzeichnet, dass** die Überwachung akustisch realisiert ist.

4. Vorrichtung nach einem der vorhergehenden Ansprüche, **dadurch gekennzeichnet, dass** die Überwachung optisch realisiert ist.

5. Vorrichtung nach einem der vorhergehenden Ansprüche, **dadurch gekennzeichnet, dass** die Vorrichtung zusätzlich einen Öffnungsvorgang einer Abdeckvorrichtung (40) des wenigstens einen Airbags (21, 31) überwacht.

6. Vorrichtung nach Anspruch 3, **dadurch gekennzeichnet, dass** die Vorrichtung zur akustischen Überwachung ein Freisprechmikrofon (39, 44) verwendet.

7. Vorrichtung nach Anspruch 5, **dadurch gekennzeichnet, dass** zur Überwachung des Öffnungsvorgangs ein Schalter (41) vorgesehen ist.

8. Vorrichtung nach einem der vorhergehenden Ansprüche, **dadurch gekennzeichnet, dass** die Vorrichtung derart mit einer Sendevorrichtung (16) verbindbar ist, dass über die Sendevorrichtung (16) eine Meldung übertragbar ist, wie viele Airbags gezündet wurden.

9. Vorrichtung nach einem der vorherigen Ansprüche, **dadurch gekennzeichnet, dass** zur Überwachung des wenigstens einen Airbags (21, 31) eine Abstandsregelung (20, 30) vorgesehen ist.

10. Vorrichtung nach Anspruch 9, **dadurch gekennzeichnet, dass** zur Abstandsregelung eine Messeinrichtung, die auf Reflexion basiert, vorgesehen ist.

## Claims

1. Device which is configured in such a way that the device monitors the inflation behaviour of at least one airbag (21, 31), **characterized in that** the device detects an event in accordance with activation of the airbag by means of a switch interrogation at the airbag cover device, and writes it into a memory for documentation purposes with a time stamp.

2. Device according to Claim 1, **characterized in that** the device can be connected to an actuation device (14, 34, 35) for the at least one airbag (21, 31) in such a way that the device influences the actuation device (14, 34, 35) as a function of the monitoring of the inflation behaviour.

3. Device according to Claim 1 or 2, **characterized in that** the monitoring is implemented acoustically.

4. Device according to one of the preceding claims, **characterized in that** the monitoring is implemented visually.

5. Device according to one of the preceding claims, **characterized in that** the device additionally monitors an opening process of a cover device (40) of the at least one airbag (21, 31).

6. Device according to Claim 3, **characterized in that** the device uses a hands-free microphone (39, 44) for acoustic monitoring.

7. Device according to Claim 5, **characterized in that** a switch (41) is provided for monitoring the opening process.

8. Device according to one of the preceding claims, **characterized in that** the device can be connected to a transmitter device (16) in such a way that a message indicating how many airbags have been fired can be transmitted via the transmitting device (16).

9. Device according to one of the preceding claims, **characterized in that** an inter-vehicle distance control system (20, 30) is provided for monitoring the at least one airbag (21, 31).

10. Device according to Claim 9, **characterized in that** a measuring device which is based on reflection is provided for the inter-vehicle distance control.

## Revendications

1. Dispositif configuré pour surveiller le comportement au gonflage d'au moins un coussin gonflable (21, 31),
**caractérisé en ce que**
le dispositif reconnaît un événement selon une activation de coussin gonflable par interrogation de commutateur du dispositif de couverture de coussin gonflable et inscrit dans une mémoire à des fins de documentation avec un cachet de temps.

2. Dispositif selon la revendication 1,
**caractérisé en ce qu'**
il est relié à un dispositif de commande (14, 34, 35) d'au moins un coussin gonflable (21, 31) de façon à influencer le dispositif de commande (14, 34, 35) en fonction de la surveillance du comportement de gonflage.

3. Dispositif selon la revendication 1 ou 2,
**caractérisé en ce que**
la surveillance se réalise de manière acoustique.

4. Dispositif selon l'une des revendications précédentes,
**caractérisé en ce que**
la surveillance se réalise de manière optique.

5. Dispositif selon l'une des revendications précédentes,
**caractérisé en ce que**
le dispositif surveille en outre une opération d'ouverture d'un dispositif de couverture (40) d'au moins un coussin gonflable (21, 31).

6. Dispositif selon la revendication 3,
**caractérisé en ce que**
le dispositif utilise un micro mains-libres (39, 44) pour la surveillance acoustique.

7. Dispositif selon la revendication 5,
**caractérisé par**
un commutateur (41) pour surveiller l'opération d'ouverture.

8. Dispositif selon l'une des revendications précédentes,
**caractérisé en ce que**
le dispositif est relié à un dispositif émetteur (16) pour transmette un message indiquant le nombre de coussins gonflables qui ont été déclenchés.

9. Dispositif selon l'une des revendications précédentes,
**caractérisé par**
une régulation de distance (20, 30) pour surveiller au moins un coussin gonflable (21, 31).

10. Dispositif selon la revendication 9,
**caractérisé en ce que**
la régulation de distance comporte une installation de mesure fondée sur la réflexion.
